# EUROPEAN PATENT APPLICATION

(11) **EP 3 457 515 A1**
(43) Date of publication of application: **20.03.2019**
(21) Application number: 18188205.1
(22) Date of filing: 09.08.2018
(51) Int. Cl.: H02J 7/00

(54) **POWER SUPPLY DEVICE**

(30) Priority: 19.09.2017 JP 2017178593
(71) Applicant: TOYOTA JIDOSHA KABUSHIKI KAISHA, Toyota-shi, Aichi-ken, 471-8571 (JP)
(72) Inventor: OKAMURA, Masaki, Aichi-ken, 471-8571 (JP); HIROE, Yoshihiko, Aichi-ken, 471-8571 (JP); TAKAMATSU, Naoyoshi, Aichi-ken, 471-8571 (JP); NIIMI, Yoshitaka, Aichi-ken, 471-8571 (JP)
(74) Representative: D Young & Co LLP

(57) **Abstract**

A power supply device includes 1 to N-th power storage modules (5c), a first switch group (5d), a second switch group (5e), and a third switch group (5f). 1st to N-th first switch mechanisms are connected respectively between the 1st to N-th power storage modules (5c) and the positive electrode-side input output unit (5a). 1st to N-th second switch mechanisms are connected respectively between the 1st to N-th power storage modules (5c) and the negative electrode-side input output unit (5b). 1st to N-l-th third switch mechanisms are connected respectively between positive electrodes of the 1st to N-l-th power storage modules and negative electrodes of the 2nd to N-th power storage modules. An N-th third switch mechanism (5f-N) is connected between a positive electrode of an N-th power storage module (5c-N) and a negative electrode of the 1st power storage module (5c-1).

## Description

### BACKGROUND OF THE INVENTION

### 1. Field of the Invention

The present invention relates to a power supply device.

### 2. Description of Related Art

Power supply devices including a plurality of batteries and power storage modules are known. For example, Japanese Patent Application Publication No. 2010-239709 (JP 2010-239709 A) discloses a power supply device that switches, with a plurality of switch means, the connection state of a plurality of batteries between a series connection state and a parallel connection state. By switching the connection state of the batteries in this way, the voltage of the power supply device can be changed to a desired voltage.

### SUMMARY OF THE INVENTION

However, the power supply device that changes the voltage by switching the connection state of the power storage modules may fail to change the voltage to a desired voltage when certain switch means fails. Assume the case where, for example, a voltage change is attempted by switching the connection state of the power storage modules from a parallel state to a series state, when a short fault occurs in certain switch means. In this case, a short-circuit current may flow through the failed switch means. In this case, since switching to the series connection is not successfully performed, the attempt to change the voltage of the power supply device to a desired voltage is failed. This indicates that the power supply device has low redundancy to the failure of the switch means. Depending on the desired voltage, not all the power storage modules may be connected. That is, some power storage modules may be connected, while the remaining power storage modules may not be connected. In such a case, the power storage modules may become different from each other in operating time, which may also cause a difference in charging state. In order to eliminate such a difference in charging state, it is desirable that the connection state can freely be selected to achieve uniform usage of the power storage modules. Accordingly, a power supply device high in degree of freedom of the connection state of the power storage modules and high in redundancy is desired.

The present invention enhances the degree of freedom of the connection state of the power storage modules, and enhances the redundancy.

An aspect of the present invention relates to a power supply device. The power supply device includes: a positive electrode-side input output unit, a negative electrode-side input output unit, 1st to N-th power storage modules where 2 ≤ N, the power storage modules each including a power storage mechanism, a first switch group including 1st to N-th first switch mechanisms each configured to conduct and cut off a current, a second switch group including 1st to N second switch mechanisms each configured to conduct and cut off the current, and a third switch group including 1st to N third switch mechanisms each configured to conduct and cut off the current. The 1st to N-th first switch mechanisms are respectively connected between positive electrodes of the 1st to N-th power storage modules and the positive electrode-side input output unit. The 1st to N-th second switch mechanisms are connected respectively between negative electrodes of the 1st to N-th power storage modules and the negative electrode-side input output unit. The 1st to N-1-th third switch mechanisms are connected respectively between positive electrodes of the 1st to N-1-th power storage modules and negative electrodes of the 2nd to N-th power storage modules. The N-th third switch mechanism is connected between a positive electrode of an N-th power storage module and the negative electrode of the 1st power storage module.

With the above configuration, the positive electrodes of the power storage modules are connected to the first switch mechanisms, the negative electrodes of the power storage modules are connected to the second switch mechanisms, and the power storage modules and the third switch mechanisms are alternately connected in series to constitute a loop circuit. This brings about the effects that the power supply device has a high degree of freedom in the connection state of the power storage modules, and has high redundancy.

The power supply device may further include coils. Each of the power storage modules may be connected in series with at least one of the coils. The configuration makes it possible to suppress damage of the switch means even when a rush current is generated.

The power supply device may further include an electronic control unit configured to switch a connection state of the power storage modules by controlling the 1st to N-th first switch mechanisms, the 1st to N-th second switch mechanisms, and the 1st to N-th third switch mechanisms to be in a current conductive state and a current cutoff state. With the configuration, it is possible to execute the control that switches the connection state of the power storage modules.

In the power supply device, the electronic control unit may be configured to switch the connection state of the power storage modules such that specified power storage modules are connected to each other by one of a series connection, a parallel connection, and a series parallel connection between the positive electrode-side input output unit and the negative electrode-side input output unit. With the configuration, the connection state of the power storage modules can be switched to various states.

In the power supply device, the electronic control unit may be configured to switch the connection state of the specified power storage modules in terms of time. With the configuration, it is possible to eliminate a difference in charging state between the power storage modules and to suppress generation of the difference.

In the power supply device, the electronic control unit may be configured to switch the connection state of the specified power storage modules based on the charging state of the power storage modules. With the configuration, it is possible to eliminate the difference in charging state between the power storage modules.

In the power supply device, the electronic control unit may be configured to switch the connection state of the power storage modules so as to form a current path that excludes a failed switch mechanism when any one switch mechanism is failed out of the 1st to N-th first switch mechanism, the 1st to N-th second switch mechanism, and the 1st to N-th third switch mechanism. With the configuration, a short-circuit current can be prevented from flowing.

In the power supply device, the electronic control unit may be configured to switch the connection state of the power storage modules so as to change an electric potential difference between the positive electrode-side input output unit and the negative electrode-side input output unit. With the configuration, the voltage of the power supply device can be changed.

In the power supply device, the electronic control unit may be configured to switch the connection state of the power storage modules to any one of a series connection, a parallel connection, and a series parallel connection. With the configuration, the voltage of the power supply device can be switched.

In the power supply device, while the electronic control unit is switching an electric potential difference between the positive electrode-side input output unit and the negative electrode-side input output unit from a first voltage to a second voltage that is different from the first voltage, the electronic control unit may be configured to gradually increase a ratio of a period of the second voltage to a period of the first voltage while repeatedly switching between the first voltage and the second voltage, and then continuously use the second voltage. With the configuration, it is possible to prevent the switch means from being damaged by a rush current.

### BRIEF DESCRIPTION OF THE DRAWINGS

Features, advantages, and technical and industrial significance of exemplary embodiments of the invention will be described below with reference to the accompanying drawings, in which like numerals denote like elements, and wherein:
FIG. 1 is a schematic configuration view illustrating one example of a vehicle mounted with a power supply device according to a first embodiment;
FIG. 2 is a circuit configuration view illustrating a power storage unit illustrated in FIG. 1;
FIG. 3A illustrates one example of a relation between the connection state of N power storage modules and the operating state of switch means;
FIG. 3B illustrates a series connection state of the N power storage modules;
FIG. 3C illustrates one example of a relation between the connection state of the N power storage modules and the operating state of the switch means;
FIG. 3D illustrates a parallel connection state of the N power storage modules;
FIG. 4A illustrates one example of a relation between the connection state of the N power storage modules and the operating state of the switch means;
FIG. 4B illustrates a series connection state of N - 1 power storage modules;
FIG. 4C illustrates one example of a relation between the connection state of the N power storage modules and the operating state of the switch means;
FIG. 4D illustrates a parallel connection state of the N - 1 power storage module;
FIG. 5A illustrates one example of a relation between the connection state of four power storage modules and the operating state of the switch means;
FIG. 5B illustrates a series parallel connection state of the four power storage modules;
FIG. 6 illustrates one example of a relation between a vehicle speed and a voltage value of the power storage unit;
FIG. 7A illustrates one example of switching the connection state of the power storage modules in a control example 1;
FIG. 7B illustrates one example of switching the connection state of the power storage modules in the control example 1;
FIG. 7C illustrates one example of switching the connection state of the power storage modules in the control example 1;
FIG. 8 is a segmentary circuit configuration view illustrating a power supply device according to a second embodiment;
FIG. 9 illustrates an example of the connection state of power storage modules in a control example 3;
FIG. 10 illustrates one example of a relation between a voltage and a current of the power storage unit;
FIG. 11A is a circuit configuration view of a power storage unit in a power supply device according to a third embodiment;
FIG. 11B is a circuit configuration view of a power storage unit in a power supply device according to a fourth embodiment;
FIG. 11C is a circuit configuration view of a power storage unit in a power supply device according to a fifth embodiment;
FIG. 11D is a circuit configuration view of a power storage unit in a power supply device according to a sixth embodiment;
FIG. 12A illustrates one example of switching the voltage in a control example 4;
FIG. 12B illustrates one example of switching the voltage in the control example 4;
FIG. 13A is a circuit configuration view illustrating one example of the power storage unit that may have a difference in charging state between the power storage modules;
FIG. 13B is a circuit configuration view illustrating one example of the power storage unit that may have a difference in charging state between the power storage modules; and
FIG. 14 is a circuit configuration view illustrating one example of the power supply device that may have a short-circuit current flowing between the power storage modules.

### DETAILED DESCRIPTION OF EMBODIMENTS

Hereinafter, a specific description will be given of a power supply device according to embodiments of the present invention with reference to the drawings. The power supply device according to the embodiments of the present invention can suitably be used as a power source of the vehicles, such as hybrid vehicles, and electric vehicles (EV), that use electric power as a power source. Hereinafter, a description is mainly given of the case where the power supply device is mounted on the hybrid vehicles.

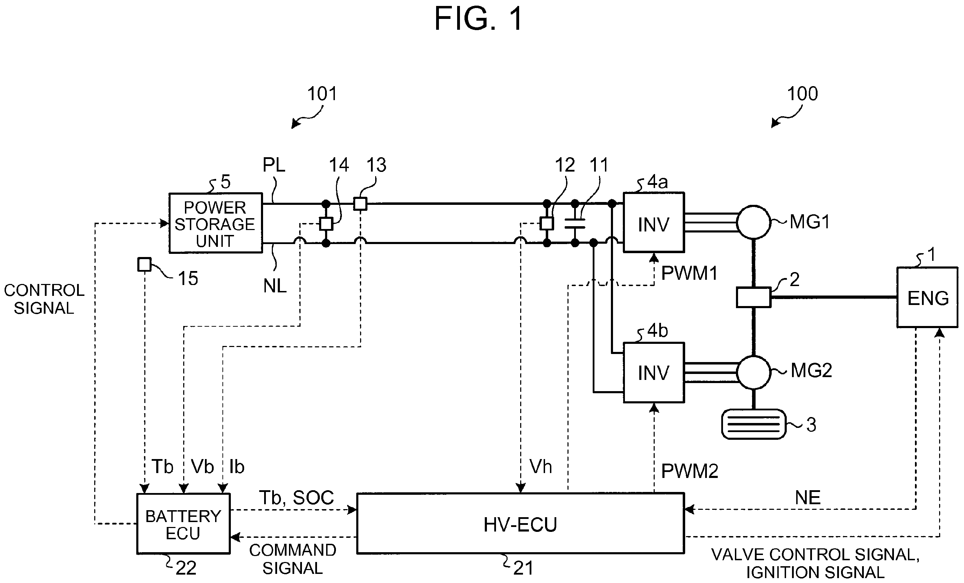

FIG. 1 is a schematic configuration view illustrating one example of a vehicle mounted with a power supply device according to a first embodiment. A vehicle 100 is a hybrid vehicle that can travel in a hybrid travel mode and an EV travel mode. The vehicle 100 includes at least an engine (ENG) 1 as an internal combustion engine, a power split device 2, driving wheels 3, motor generators MG1, MG2, inverters (INV) 4a, 4b, a power storage unit 5, a condenser 11, voltage sensors 12, 14, an electric current sensor 13, a temperature sensor 15, a hybrid-electronic control unit (HV-ECU) 21, and a battery electronic control unit (battery ECU) 22. The power supply device 101 according to the first embodiment is configured to include at least the power storage unit 5, and the battery ECU 22 as a control unit.

The engine 1 is a well-known engine, such as a gasoline engine and a diesel engine. The motor generators MG1, MG2 have functions of both an electric motor and an electric generator. The power split device 2 is formed from a planetary gear mechanism that is made up of three elements including a sun gear, a planetary carrier, and a ring gear, for example. The engine 1 and the motor generators MG1, MG2 are each coupled with any one of the three elements.

At the time of traveling of the vehicle 100, the power split device 2 splits the drive power output from the engine 1 into two parts; one part is distributed to a motor generator MG1 side, while the other part is distributed to a motor generator MG2 side. The drive power distributed to the motor generator MG1 side is used for power generation in the motor generator MG1. The drive power distributed to the motor generator MG2 side is combined with the drive power output from the motor generator MG2, and is output to the driving wheels 3.

The inverters 4a, 4b have a function of alternately converting direct-current electric power and alternating-current electric power. The inverters 4a, 4b are connected to the power storage unit 5 through a positive line PL and a negative line NL. The inverter 4a converts the alternating-current electric power generated by the motor generator MG1 into direct-current electric power, and supplies the converted direct-current electric power to the power storage unit 5, for example. For example, the inverter 4b converts the direct-current electric power supplied from the power storage unit 5 into alternating-current electric power, and supplies the converted alternating-current electric power to the motor generator MG2 to generate drive power.

The power storage unit 5 discharges electric power to the inverters 4a, 4b through the positive line PL and the negative line NL, or stores the electric power supplied from the inverters 4a, 4b.

The condenser 11 is connected to the positive line PL and the negative line NL to smooth electric power flowing between the power storage unit 5 and the inverters 4a, 4b. The voltage sensor 12 is connected to the positive line PL and the negative line NL to detect a voltage Vh applied to the condenser 11 and to output a detection signal to the HV-ECU 21.

The electric current sensor 13 is provided in the positive line PL, to detect a current Ib of the electric power that is discharged from or stored in the power storage unit 5 and to output a signal of the current Ib to the battery ECU 22. The voltage sensor 14 is connected to the positive line PL and the negative line NL to detect a voltage Vb of the power storage unit 5 and to output a detection signal of the voltage Vb to the battery ECU 22.

The temperature sensor 15 is provided in the vicinity of the power storage unit 5 to detect a temperature Tb of the power storage unit 5 and to output a detection signal of the temperature Tb to the battery ECU 22.

The HV-ECU 21 and the battery ECU 22 are configured to be able to communicate with each other. The HV-ECU 21 and the battery ECU 22 can transmit and receive signals, such as various commands and detection results of various sensors. The HV-ECU 21 mainly controls the engine 1 and the motor generators MG1, MG2, and also controls the voltage of the power storage unit 5 in order to generate vehicle driving power in response to the request of a driver at the time of traveling of the vehicle 100. The HV-ECU 21 receives signals, such as a rotation speed NE of the engine 1, rotation speeds of the motor generators MG1, MG2, a vehicle speed, an accelerator operation amount, a voltage Vh, a temperature Tb, and a value of the state of charge (SOC) of the power storage unit 5. The HV-ECU 21 also outputs signals calculated based on input information, the signals including an electronic throttle valve control signal (valve control signal) and an ignition signal for the engine 1, PWM1, PWM2 as pulse width modulation (PWM) control signals for the inverters 4a, 4b, and a command signal for switching the voltage of the power storage unit 5 to a request voltage. Here, the request voltage to the power storage unit 5 is calculated in accordance with a load applied to the power storage unit 5.

The battery ECU 22 mainly performs management of the charging state of the power storage unit 5, detection of abnormality, and voltage control. The battery ECU 22 receives signals such as a temperature Tb, a voltage Vb, and a current Ib. The battery ECU 22 calculates the SOC of the power storage unit 5 based on the temperature Tb, the voltage Vb, and the current Ib. The battery ECU 22 transmits signals such as the temperature Tb and the SOC to the HV-ECU 21. The battery ECU 22 also outputs control signals to the power storage unit 5 based on the command signals received from the HV-ECU 21.

The HV-ECU 21 and the battery ECU 22 are physically electronic circuits mainly constituted of a well-known microcomputer including a central processing unit (CPU), a random access memory (RAM), a read only memory (ROM), and interfaces such as input-output devices. The functions of the HV-ECU 21 and the battery ECU 22 are implemented such that application programs stored in the ROM are loaded into the RAM and executed by the CPU to operate a control target under the control of the CPU, while data is read from and written to the RAM or the ROM.

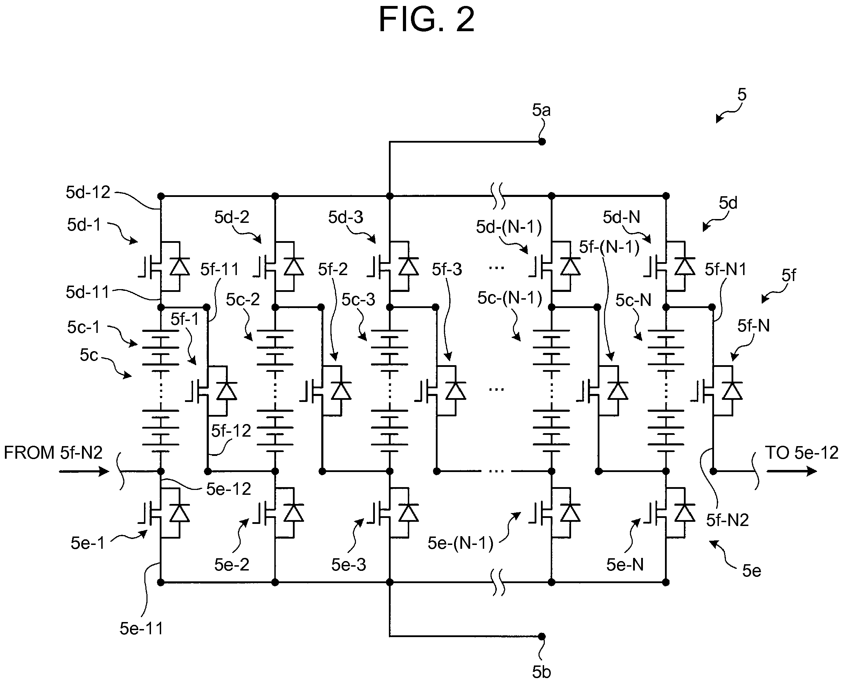

FIG. 2 is a circuit configuration view illustrating the power storage unit 5 illustrated in FIG. 1. The power storage unit 5 includes a positive electrode-side input output unit 5a, a negative electrode-side input output unit 5b, a power storage module group 5c, a first switch group 5d, a second switch group 5e, and a third switch group 5f.

The positive electrode-side input output unit 5a is connected to the positive line PL. The negative electrode-side input output unit 5b is connected to the negative line NL. The power storage module group 5c includes N power storage modules 5c-1 to 5c-N. While N is an integer equal to or above two, N is four or more in the first embodiment in particular. Each of the power storage modules 5c-1 to 5c-N is configured to have a plurality of secondary batteries as power storage means connected in series. For example, the secondary batteries are batteries such as lithium-ion batteries and nickel-hydrogen batteries. As the power storage means, a capacitor may be used in place of the secondary battery. In the description below, all the N power storage modules 5c-1 to 5c-N have a voltage of Vm for easy understanding.

The first switch group 5d includes N first switch means 5d-1 to 5d-N. The first switch means 5d-1 includes a first terminal 5d-11 and a second terminal 5d-12. The first switch means 5d-1 operates to conduct or cut off a current between the first terminal 5d-11 and the second terminal 5d-12. Other first switch means 5d-2 to 5d-N similarly operate to conduct or cut off the current between the corresponding first terminal and second terminal. The i-th (i = 1, ..., N) first switch means 5d-i has a first terminal connected to the positive electrode of the i-th power storage module 5c-i, and a second terminal connected to the positive electrode-side input output unit 5a.

The second switch group 5e includes N second switch means 5e-1 to 5e-N. The second switch means 5e-1 includes a first terminal 5e-11 and a second terminal 5e-12. The second switch means 5e-1 operates to conduct or cut off a current between the first terminal 5e-11 and the second terminal 5e-12. Other second switch means 5e-2 to 5e-N similarly operate to conduct or cut off the current between the corresponding first terminal and second terminal. The i-th (i = 1, ..., N) second switch means 5e-i has a first terminal connected to the negative electrode-side input output unit 5b and a second terminal connected to the negative electrode of the i-th power storage module 5c-i.

The third switch group 5f includes N third switch means 5f-1 to 5f-N. The third switch means 5f-1 includes a first terminal 5f-11 and a second terminal 5f-12. The third switch means 5f-1 operates to conduct or cut off a current between the first terminal 5f-11 and the second terminal 5f-12. Other third switch means 5f-2 to 5f-N similarly operate to conduct or cut off the current between the corresponding first terminal and second terminal.

The i-th (provided that i ≠ N) third switch means 5f-i has a first terminal connected to the positive electrode of the i-th power storage module 5c-i and to the first terminal of the i-th first switch means 5d-i. The i-th third switch means 5f-i also has a second terminal connected to the negative electrode of the i + 1-th power storage module 5c-(i + 1) and to the second terminal of the i + 1-th second switch means 5e-(i + 1). The N-th third switch means 5f-N has a first terminal 5f-N1 connected to the positive electrode of the N-th power storage module 5c-N and to the first terminal of the N-th first switch means 5d-N. The N-th third switch means 5f-N also has a second terminal 5f-N2 connected to the negative electrode of the 1st power storage module 5c-1 and to the second terminal 5e-12 of the 1st second switch means 5e-1. As a consequence, the power storage modules 5c-1 to 5c-N and the third switch means 5f-1 to 5f-N are alternately connected in series to constitute a loop circuit.

The first switch means 5d-1 to 5d-N, the second switch means 5e-1 to 5e-N, and the third switch means 5f-1 to 5f-N are each constituted of a semiconductor switching device, such as a transistor, and a diode. Each of the switch means is controlled such that the operating state is switched between a current conductive state (ON state) and a current cutoff state (OFF state) when a control signal is supplied from the battery ECU 22. For example, when the semiconductor switching device is a field-effect transistor (FET) or an insulated gate bipolar transistor (IGBT), the control signal is a gate voltage signal. The switch means may be a relay element.

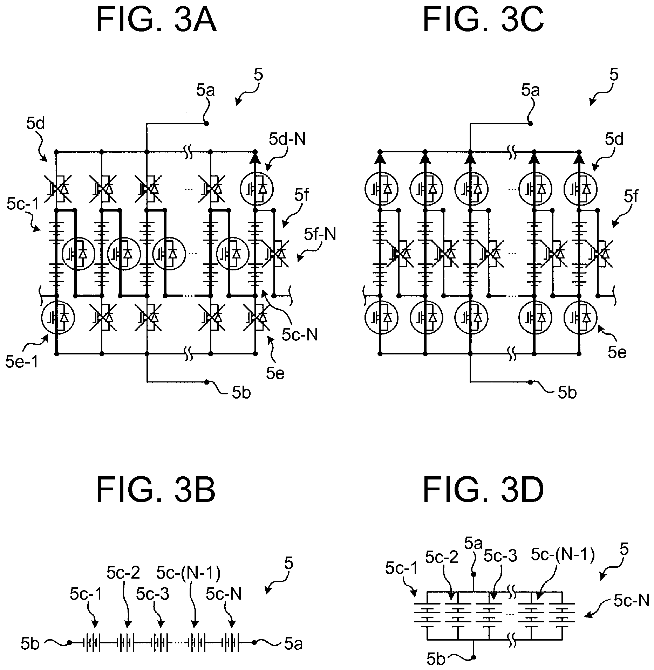

With reference to FIGS. 3A to 5B, one example of a relation between the connection state of the power storage modules 5c-1 to 5c-N and the operating state of the first switch means 5d-1 to 5d-N, the second switch means 5e-1 to 5e-N, and the third switch means 5f-1 to 5f-N is described. In FIGS. 3A to 5B, the switch means in an ON state are encircled, and the switch means in an OFF state are crossed out.

FIG. 3A illustrates a series connection of N power storage modules 5c-1 to 5c-N as illustrated in FIG. 3B. To implement the state of FIG. 3A, out of the first switch means in the first switch group 5d, only the first switch means 5d-N is turned on, and the rest of the first switch means are turned off by a control signal from the battery ECU 22. Out of the second switch means in the second switch group 5e, only the second switch means 5e-1 is turned on, and the rest of the second switch means are turned off. Out of the third switch means in the third switch group 5f, only the third switch means 5f-N is turned off, and the rest of the third switch means are turned on. As a consequence, the N power storage modules 5c-1 to 5c-N are connected in series, and a current flows in the path illustrated with a thick arrow line when electric power is discharged. In this case, the voltage Vb of the power storage unit 5 is equal to N Vm.

FIG. 3C illustrates a parallel connection of N power storage modules 5c-1 to 5c-N as illustrated in FIG. 3D. To implement the state of FIG. 3C, the switch means in the first switch group 5d and the second switch group 5e are all turned on by a control signal from the battery ECU 22. All the switch means in the third switch group 5f are turned off. As a consequence, the N power storage modules 5c-1 to 5c-N are connected in parallel, and a current flows in the path illustrated with a thick arrow line when electric power is discharged. In this case, the voltage Vb of the power storage unit 5 is equal to Vm.

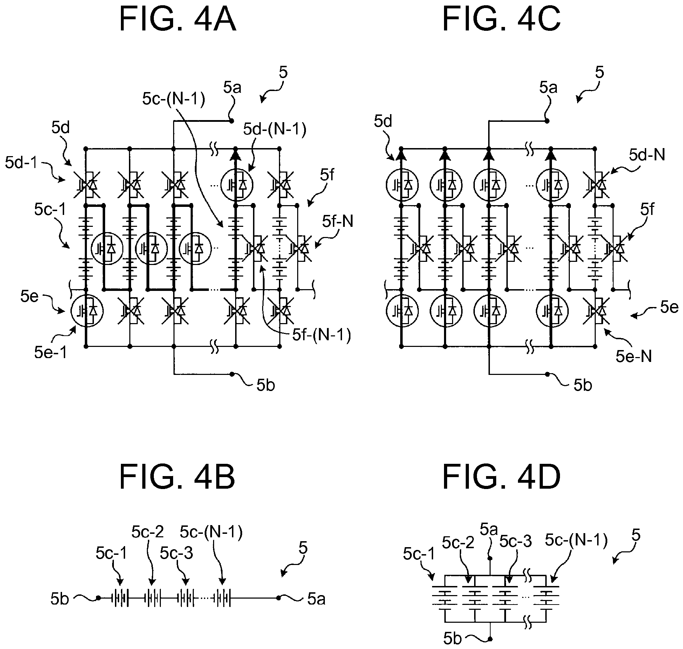

FIG. 4A illustrates a series connection of (N - 1) power storage modules 5c-1 to 5c-(N - 1) as illustrated in FIG. 4B. To implement the state of FIG. 4A, out of the first switch means in the first switch group 5d, only the first switch means 5d-(N - 1) is turned on, and the rest of the first switch means are turned off by a control signal from the battery ECU 22. Out of the second switch means in the second switch group 5e, only the second switch means 5e-1 is turned on, and the rest of the second switch means are turned off. Out of the third switch means in the third switch group 5f, the third switch means 5f-(N - 1), 5f-N are turned off, and the rest of the third switch means are turned on. Consequently, (N - 1) power storage modules 5c-1 to 5c-(N - 1) are connected in series, and a current flows in the path illustrated with a thick arrow line when electric power is discharged. In this case, the voltage Vb of the power storage unit 5 is equal to (N - 1) Vm.

FIG. 4C illustrates a parallel connection of (N - 1) power storage modules 5c-1 to 5c-(N - 1) as illustrated in FIG. 4D. To implement the state of FIG. 4C, out of the first switch means in the first switch group 5d, only the first switch means 5d-N is turned off, and the rest of the first switch means are turned on by a control signal from the battery ECU 22. Out of the second switch means in the second switch group 5e, only the second switch means 5e-N is turned off, and the rest of the second switch means are turned on. All the switch means in the third switch group 5f are turned off. Consequently, (N - 1) power storage modules 5c-1 to 5c-(N - 1) are connected in parallel, and a current flows in the path illustrated with a thick arrow line when electric power is discharged. In this case, the voltage Vb of the power storage unit 5 is equal to Vm.

Since the degree of freedom of the connection state of the power storage modules 5c-1 to 5c-N is high, the power storage unit 5 can implement a series connection of (N - 1) power storage modules excluding any one power storage module from the N power storage modules 5c-1 to 5c-N. For example, to implement a series connection of (N - 1) power storage modules excluding the 2nd power storage module 5c-2, only the first switch means 5d-1 is turned on, out of the first switch means in the first switch group 5d, and the rest of the first switch means are turned off by a control signal from the battery ECU 22, for example. Out of the second switch means in the second switch group 5e, only the second switch means 5e-3 is turned on, and the rest of the second switch means are turned off. Out of the third switch means in the third switch group 5f, the third switch means 5f-1, 5f-2 are turned off, and the rest of the third switch means are turned on. As a consequence, (N - 1) power storage modules excluding the power storage module 5c-2 are connected in series, and the voltage Vb of the power storage unit 5 is equal to (N - 1) Vm. Similarly, the control signal from the battery ECU 22 can implement a series connection of the power storage modules excluding any number of the power storage modules from the power storage modules 5c-1 to 5c-(N - 1) with the voltage Vb of the power storage unit 5 being 2 Vm, ..., (N - 2) Vm.

The power storage unit 5 can also implement a parallel connection of (N - 1) power storage modules excluding any one power storage module from the N power storage modules 5c-1 to 5c-N. For example, to implement a parallel connection of (N - 1) power storage modules excluding the 2nd power storage module 5c-2, only the first switch means 5d-2 is turned off, out of the first switch means in the first switch group 5d, and the rest of the first switch means are turned on by a control signal from the battery ECU 22. Out of the second switch means in the second switch group 5e, only the second switch means 5e-2 is turned off, and the rest of the second switch means are turned on. All the switch means in the third switch group 5f are turned off. As a consequence, (N - 1) power storage modules excluding the power storage module 5c-2 are connected in parallel. Similarly, the control signal from the battery ECU 22 can implement a parallel connection of the power storage modules with any number of the power storage modules being excluded from the power storage modules 5c-1 to 5c-N.

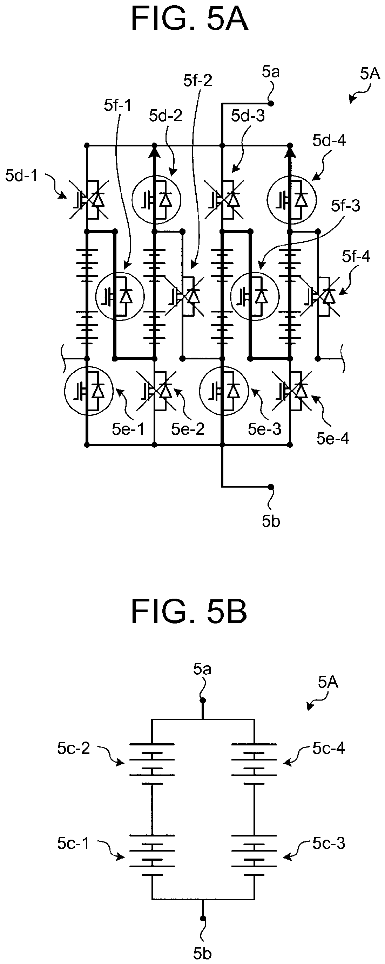

FIG. 5A illustrates a series parallel connection of four power storage modules 5c-1 to 5c-4 in a power storage unit 5A where N is four as illustrated in FIG. 5B. Specifically, the power storage modules are connected in two series lines and two parallel lines. To implement the state of FIG. 5A, the first switch means 5d-1, 5d-3 are turned off, and the first switch means 5d-2, 5d-4 are turned on by a control signal from the battery ECU 22. The second switch means 5e-2, 5e-4 are turned off, and the second switch means 5e-1, 5e-3 are turned on. The third switch means 5f-2, 5f-4 are turned off, and the third switch means 5f-1, 5f-3 are turned on. As a consequence, the power storage modules 5c-1 to 5c-4 are connected in two series lines and two parallel lines, and a current flows in the path illustrated with a thick arrow line when electric power is discharged. In this case, the voltage Vb of the power storage unit 5 is equal to 2 Vm.

The power storage unit 5 can implement a connection in L series lines and M parallel lines in the range of L × M ≤ N where L and M are integers equal to or above two.

As described in the foregoing, the degree of freedom of the connection states of the power storage modules 5c-1 to 5c-N is high in the power storage unit 5. Accordingly, the connection states of the power storage modules 5c-1 to 5c-N can be switched with a high degree of freedom in order to implement a desired voltage as a voltage Vb, i.e., an electric potential difference between the positive electrode-side input output unit 5a and the negative electrode-side input output unit 5b in the range of Vm to N Vm. The combination of the operating states of the first switch group 5d, the second switch group 5e, and the third switch group 5f to implement the above-stated connection state of the power storage modules 5c-1 to 5c-N is stored in the ROM of the battery ECU 22. The battery ECU 22 outputs to the power storage unit 5 a control signal for executing the combination of the operating states of the first switch group 5d, the second switch group 5e, and the third switch group 5f to set the voltage Vb of the power storage unit 5 as a request voltage based on a command signal indicative of a request voltage to the power storage unit 5 received from the HV-ECU 21.

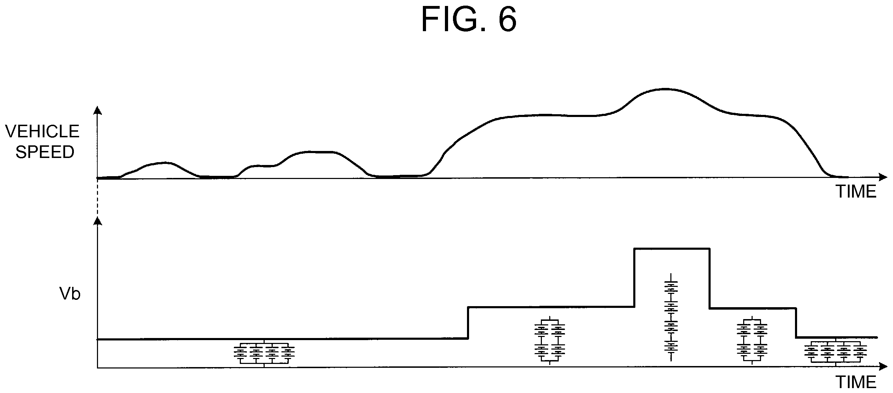

Here, sufficient power efficiency is achieved by changing the voltage Vb such that the voltage Vb of the power storage unit 5 is increased when a high load is applied to the power storage unit 5 and that the voltage Vb is decreased when a low load is applied to the power storage unit 5. FIG. 6 illustrates one example of the relation between the vehicle speed and the voltage Vb of the power storage unit 5. In the example illustrated in FIG. 6, the connection state of four power storage modules is switched to any one state out of a total parallel state where all the power storage modules are in a parallel state, a two series line-two parallel line state, and a total series state. When a high load is applied to the power storage unit 5 as in the case where the vehicle speed is high, a high voltage is requested to the power storage unit 5, and the connection state of a high voltage Vb is selected.

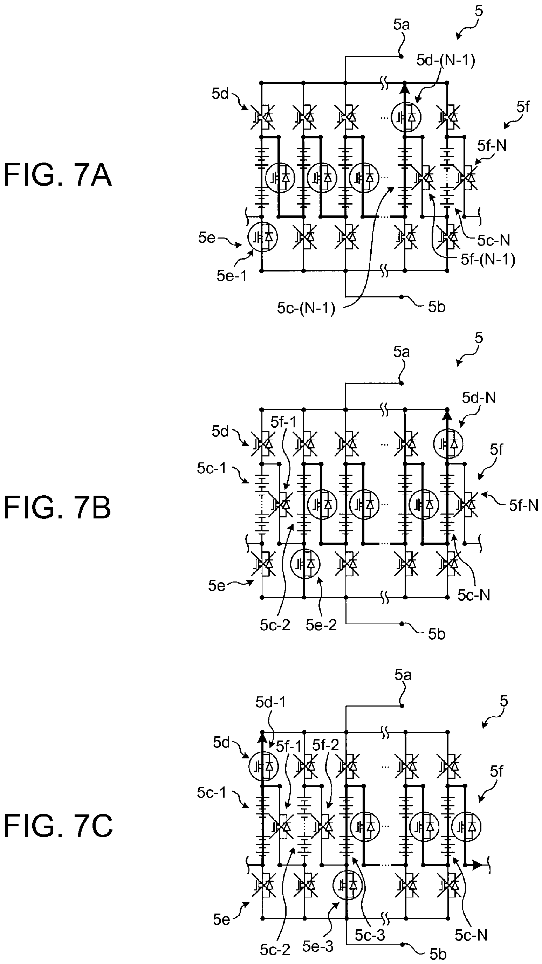

Hereinafter, a description is given of a control example 1 where the battery ECU 22 switches the connection state of the power storage modules 5c-1 to 5c-N of the power storage unit 5. FIGS. 7A, 7B, and 7C illustrate examples of switching the connection state of the power storage modules 5c-1 to 5c-N in the control example 1. In the control example 1, out of the power storage modules 5c-1 to 5c-N, (N - 1) power storage modules are connected in series, and the voltage Vb of the power storage unit 5 is set to (N - 1) Vm.

In the control example 1, the battery ECU 22 switches, in terms of time, the power storage modules to be connected in series, out of the power storage modules 5c-1 to 5c-N. Specifically, FIG. 7A illustrates a connection state where (N - 1) power storage modules 5c-1 to 5c-(N - 1) excluding the power storage module 5c-N are connected in series. FIG. 7B illustrates a connection state where (N - 1) power storage modules excluding the power storage module 5c-1 are connected in series. FIG. 7C illustrates a connection state where (N - 1) power storage modules excluding the power storage module 5c-2 are connected in series. In the drawings, a thick arrow represents a current path when electric power is discharged.

The connection state of FIG. 7A is the same as that of FIG. 4A. The connection state of FIG. 7B is implemented as follows. That is, out of the first switch means in the first switch group 5d, only the first switch means 5d-N is turned on, and the rest of the first switch means are turned off. Out of the second switch means in the second switch group 5e, only the second switch means 5e-2 is turned on, and the rest of the second switch means are turned off. Out of the third switch means in the third switch group 5f, the third switch means 5f-1, 5f-N are turned off, and the rest of the third switch means are turned on. The connection state of FIG. 7C is implemented as follows. That is, out of the first switch means in the first switch group 5d, only the first switch means 5d-1 is turned on, and the rest of the first switch means are turned off. Out of the second switch means in the second switch group 5e, only the second switch means 5e-3 is turned on, and the rest of the second switch means are turned off. Out of the third switch means in the third switch group 5f, the third switch means 5f-1, 5f-2 are turned off, and the rest of the third switch means are turned on.

The battery ECU 22 switches, in terms of time, the series connection state of (N - 1) power storage modules excluding any one of the power storage modules 5c-1 to 5c-N, the series connection state including the states of FIGS. 7A, 7B, and 7C. The switching may be performed such that the power storage module excluded from the power storage modules connected in series is sequentially shifted to an adjacent power storage module as in the order of 5c-1, 5c-2, ..., or is shifted at random. As a consequence, all the power storage modules 5c-1 to 5c-N are used at the same frequency. As a result, a difference in charging state between the power storage modules is eliminated, or generation of the difference is suppressed. As a result, the redundancy of the power storage unit 5 is enhanced. There are N patterns for the series connection state of (N - 1) power storage modules excluding any one of the power storage modules 5c-1 to 5c-(N - 1). Accordingly, it is preferable to perform switching in all the N patterns, though it is not necessarily essential to perform switching in all the patterns.

In a modification of the control example 1, the power storage modules that are connected in parallel or connected in series and parallel, out of the power storage modules 5c-1 to 5c-N, may be controlled to be switched in terms of time. For example, when the state of (N - 1) power storage modules connected in parallel, out of the power storage modules 5c-1 to 5c-N, are switched in terms of time as in FIG. 4C, the switching may be performed such that the power storage module excluded from the power storage modules connected in parallel, out of the power storage modules 5c-1 to 5c-N, is sequentially shifted to an adjacent power storage module as in the order of 5c-1, 5c-2, ..., or is shifted at random. For example, when the power storage modules are connected in L series lines and M parallel lines, there is a power storage module, out of the power storage modules 5c-1 to 5c-N, that is not used for the connection in L series lines and M parallel lines when L × M < N. Accordingly, the unused power storage module may be controlled to be switched in terms of time. When such control is performed, a difference in charging state between the power storage modules is eliminated, or generation of the difference is suppressed. As a result, the redundancy of the power storage unit is enhanced. In the control example 1 and the modification of the control example 1, the period of each connection state is preferably uniform. However, the period is not limited to the uniform period as long as the difference in charging state between the power storage modules is eliminated or generation of the difference is suppressed.

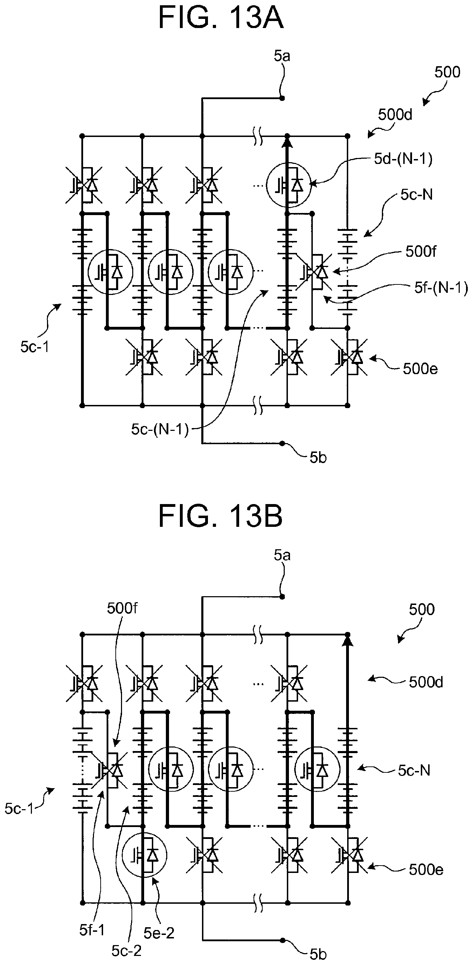

Here, a power storage unit 500 that may cause a difference in charging state between the power storage modules is described as a first comparative example as illustrated in FIGS. 13A and 13B. The power storage unit 500 has the configuration of the power storage unit 5 except that the first switch group 5d is replaced with a first switch group 500d in which the first switch means 5d-N is deleted, the second switch group 5e is replaced with a second switch group 500e in which the second switch means 5e-1 is deleted, and the third switch group 5f is replaced with a third switch group 500f in which the third switch means 5f-N is deleted. That is, the power storage unit 500 has neither the configuration where the positive electrodes of the power storage modules are connected to the first switch means and the negative electrodes are connected to the second switch means, nor the configuration where the power storage modules and the third switch means are alternately connected in series to form a loop circuit. In such a power storage unit 500, two connection states illustrated in FIGS. 13A and 13B may be provided in order to implement the state where (N - 1) power storage modules are connected in series. However, in both the connection states, the power storage modules 5c-2 to 5c-(N - 1) are in a constantly used state. Accordingly, the power storage modules 5c-2 to 5c-(N - 1) tend to have a difference in SOC from the power storage modules 5c-1, 5c-N that may not be used, and the difference is hard to be eliminated. As a result, the redundancy is low.

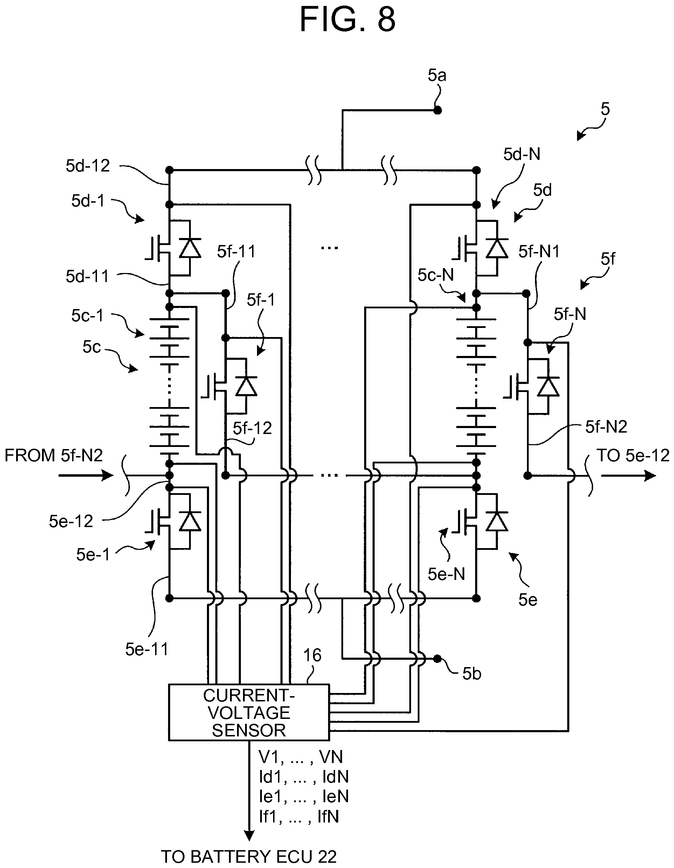

FIG. 8 is a segmentary circuit configuration view illustrating a power supply device according to a second embodiment. The power supply device according to the second embodiment is based on the power supply device 101 according to the first embodiment with a current-voltage sensor 16 added thereto.

The current-voltage sensor 16 is configured to be able to detect a current flowing in each of the first switch means 5d-1 to 5d-N, the second switch means 5e-1 to 5e-N, and the third switch means 5f-1 to 5f-N. The current-voltage sensor 16 is also configured to be able to detect a voltage in each of the power storage modules 5c-1 to 5c-N. For example, the current-voltage sensor 16 may include 3N electric current sensors that detect the current flowing in each of the first switch means 5d-1 to 5d-N, the second switch means 5e-1 to 5e-N, and the third switch means 5f-1 to 5f-N. The current-voltage sensor 16 may also include N voltage sensors that detect the voltage in each of the power storage modules 5c-1 to 5c-N.

The current-voltage sensor 16 detects currents Id1, ..., IdN, Ie1, ..., IeN, If1, ..., IfN flowing in the first switch means 5d-1 to 5d-N, the second switch means 5e-1 to 5e-N, and the third switch means 5f-1 to 5f-N, respectively. The current-voltage sensor 16 then outputs signals indicative of the currents to the battery ECU 22. The current-voltage sensor 16 also detects voltages V1, ..., VN of the power storage modules 5c-1 to 5c-N, respectively, and outputs signals indicative of the voltages to the battery ECU 22. The battery ECU 22 calculates SOCs of the power storage modules 5c-1 to 5c-N, respectively, based on the current and voltage information and the temperature Tb.

Hereinafter, a description is given of a control example 2 that can be executed by the power supply device according to the second embodiment. In the control example 2, the battery ECU 22 switches the connection state of the power storage modules 5c-1 to 5c-N. In the control example 2, the battery ECU 22 outputs control signals to the first switch means 5d-1 to 5d-N, the second switch means 5e-1 to 5e-N, and the third switch means 5f-1 to 5f-N based on the calculated SOCs of the power storage modules 5c-1 to 5c-N and on a command signal received from the HV-ECU 21. Specifically, the battery ECU 22 switches the connection state of the power storage modules 5c-1 to 5c-N so as to implement a request voltage to the power storage unit 5 and to discharge electric power preferentially from the power storage module high in SOC when the power storage unit 5 is in a discharge state. For example, when the battery ECU 22 determines that the power storage module 5c-1 has the lowest SOC at the time of executing a series connection of (N - 1) power storage modules, the battery ECU 22 switches the connection state to the state where the power storage modules 5c-2 to 5c-N discharge electric power as in FIG. 7B. When the power storage unit 5 is in a charging state, the battery ECU 22 switches the connection state of the power storage modules 5c-1 to 5c-N so as to preferentially charge the power storage module having a low SOC. As a consequence, the difference in charging state between the power storage modules is eliminated, and the redundancy is enhanced.

A description is now given of a control example 3 that can be executed by the power supply device according to the second embodiment. In the control example 3, the battery ECU 22 switches the connection state of the power storage modules 5c-1 to 5c-N. In the control example 3, when any one switch means is failed out of the first switch means 5d-1 to 5d-N, the second switch means 5e-1 to 5e-N, and the third switch means 5f-1 to 5f-N, the battery ECU 22 controls the power storage modules 5c-1 to 5c-N to be in a connection state where the failed switch means does not form a current path.

For example, when the power storage modules 5c-1 to 5c-N are in a specified connection state, the battery ECU 22 determines whether or not any one switch means is failed out of the first switch means 5d-1 to 5d-N, the second switch means 5e-1 to 5e-N, and the third switch means 5f-1 to 5f-N, based on currents Id1, ..., IdN, Ie1, ..., IeN, If1, ..., IfN input from the current-voltage sensor 16. For example, when detecting the flow of a current to the switch means that is not supposed to receive the current or detecting the absence of the current in the switch means that is supposed to receive the current in the specified connection state, the battery ECU 22 determines that the pertinent switch means is failed.

When determining that certain switch means is failed, the battery ECU 22 provides the connection state of the power storage modules 5c-1 to 5c-N where the failed switch means does not form a current path.

For example, when the first switch means 5d-1 has a short fault in the connection state of (N - 1) power storage modules as in FIG. 4A, a short-circuit current may flow from the power storage module 5c-(N - 1) into the power storage module 5c-1 through the first switch means 5d-1. The current-voltage sensor 16 detects the current flowing into the first switch means 5d-1.

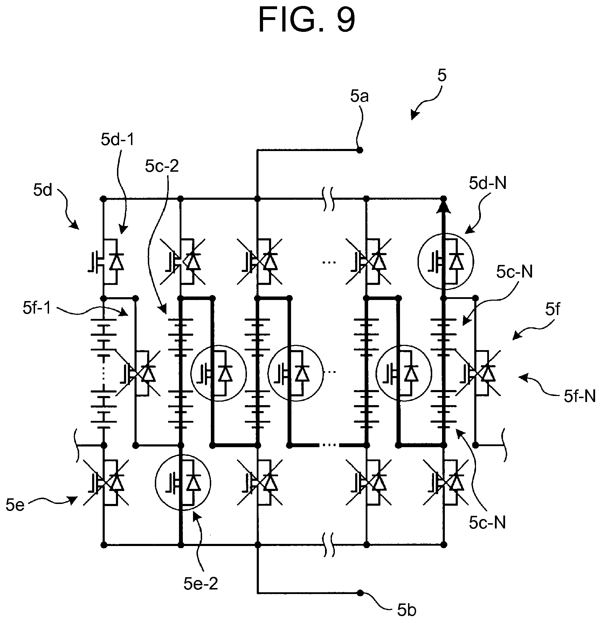

When determining that the first switch means 5d-1 is failed based on the signal from the current-voltage sensor 16, the battery ECU 22 provides the connection state of the power storage modules 5c-1 to 5c-N where the first switch means 5d-1 does not form a current path. For example, the battery ECU 22 controls the operating state of the first switch means 5d-2 to 5d-N, the second switch means 5e-1 to 5e-N, and the third switch means 5f-1 to 5f-N to provide the connection state illustrated in FIG. 9. Accordingly, a flow of the short-circuit current can be prevented. As a result, the redundancy to the failure of the switch means is enhanced.

Following control may also be performed as a modification of the control example 3. That is, when the first switch means 5d-1 has a short fault in the connection state as in FIG. 3A where N power storage modules 5c-1 to 5c-N are connected in series with the voltage of the power storage unit 5 being N Vm, a short-circuit current can flow from the power storage module 5c-N into the power storage module 5c-1 through the first switch means 5d-1. In this case, when determining that the first switch means 5d-1 is failed based on the signal from the current-voltage sensor 16, the battery ECU 22 may control the operating state of the first switch means 5d-2 to 5d-N, the second switch means 5e-1 to 5e-N, and the third switch means 5f-1 to 5f-N so as to provide the connection state illustrated in FIG. 9. As a consequence, a flow of the short-circuit current can be prevented, while the voltage of the power storage unit 5 is set to (N - 1) Vm close to N Vm. This makes it possible to demonstrate the redundancy to the failure of the switch means.

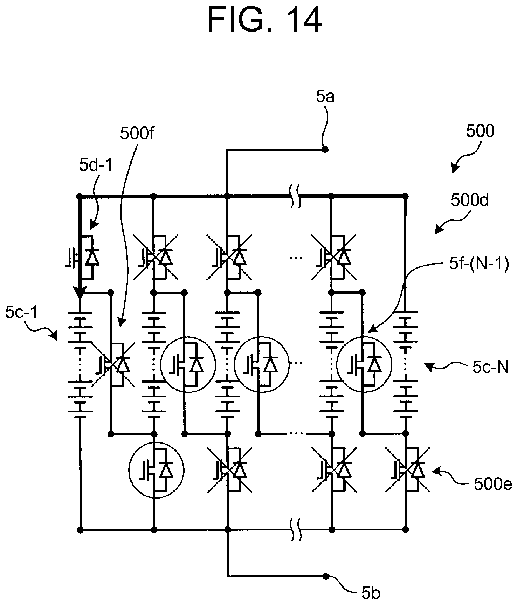

Here, a description is given of a power storage unit 500 having the same configuration as in FIGS. 13A and 13B as a second comparative example with reference to FIG. 14. In the power storage unit 500 of the second comparative example, a short-circuit current may flow between the power storage modules. Assume the case where the first switch means 5d-1 has a short fault in the power storage unit 500, and so the connection state similar to that in FIG. 9 as in the control example 3 is provided as an attempt to prevent the short-circuit current. In this case, since the second switch means that cuts off the current is not present in the negative electrode side of the power storage module 5c-1, it is difficult to prevent the short-circuit current flowing as illustrated with a thick arrow line.

A description is now given of the power supply devices according to third to sixth embodiments. First, a description is given of the problems that may arise when the voltage of the power storage unit 5 in the power supply device 101 is switched.

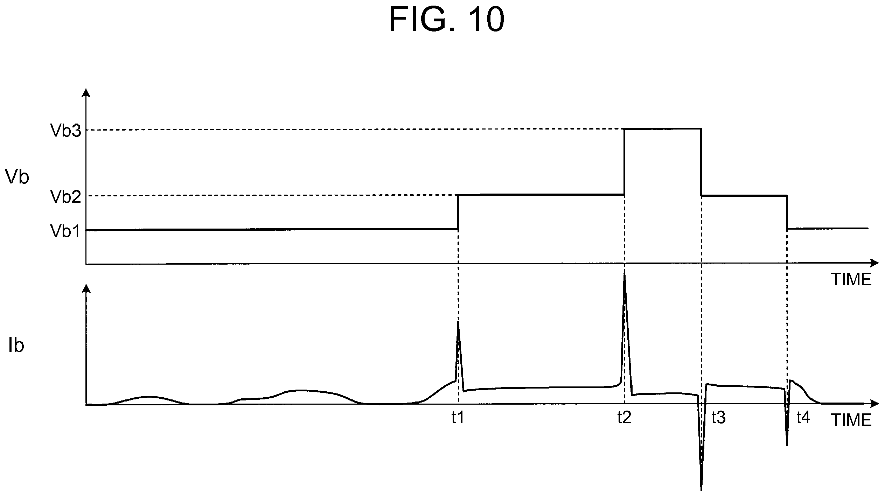

FIG. 10 illustrates one example of a relation between the voltage Vb and the current Ib of the power storage unit 5. For example, when a value of the voltage Vb is switched from Vb1 to Vb2 that is higher than Vb1 at time t1, a surge-like rush current may flow in a positive direction. Similarly, when a value of the voltage Vb is switched from Vb2 to Vb3 that is higher than Vb2 at time t2, a rush current may flow in the positive direction. Similarly, when values of the voltage Vb are switched from Vb3 to Vb2 at time t3, and from Vb2 to Vb1 at time t4, the rush current may flow in a negative direction. Here, the positive direction is the direction in which the current flows at the time of discharging of the power storage unit 5. The negative direction is the direction in which the current flows at the time of charging of the power storage unit 5. The rush current is considered to be generated due to an electric potential difference generated between the power storage unit 5 and the condenser 11 (see FIG. 1) when the voltage Vb of the power storage unit 5 is switched. When such a rush current flows, there is a possibility that the switch means of the power storage unit 5 may be damaged.

Accordingly, the power supply devices according to the third to sixth embodiments are configured to include at least one coil connected in series to each of the power storage modules in the power storage unit. When a rush current flows, the coil generates electromotive force in the direction of lowering the peak value of the rush current. As a result, the rush current can be weakened, and the damage of the switch means can be prevented. It is preferable to use, as the coil, a coil having self-inductance that can lower the peak value of the rush current to the level that can prevent the damage of the switch means in accordance with the electric potential difference before and after switching the voltage of the power storage unit.

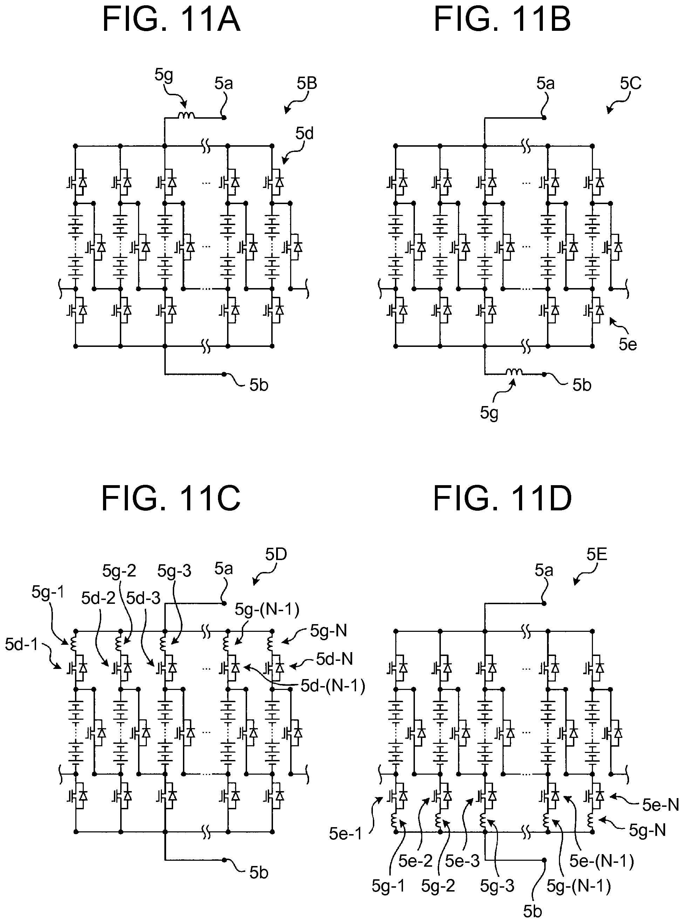

FIGS. 11A, 11B, 11C, and 11D are circuit configuration views of the power storage units of the power supply devices according to the third to sixth embodiments. In FIG. 11A, a power storage unit 5B of the power supply device according to the third embodiment has the configuration of the power storage unit 5 illustrated in FIG. 2, with one coil 5g provided between the first switch group 5d and the positive electrode-side input output unit 5a. The coil 5g is connected in series to all of the power storage modules 5c-1 to 5c-N.

In FIG. 11B, a power storage unit 5C of the power supply device according to the fourth embodiment has the configuration of the power storage unit 5, with one coil 5g provided between the second switch group 5e and the negative electrode-side input output unit 5b. In this case, the coil 5g is also connected in series to all of the power storage modules 5c-1 to 5c-N.

A power storage unit 5D of the power supply device according to the fifth embodiment illustrated in FIG. 11C has the configuration of the power storage unit 5, with coils 5g-1 to 5g-N respectively provided between each of the first switch means 5d-1 to 5d-N, and the positive electrode-side input output unit 5a. In this case, the coil 5g-i (i = 1, ..., N) is connected in series to the power storage module 5c-i.

A power storage unit 5E of the power supply device according to the sixth embodiment illustrated in FIG. 11D has the configuration of the power storage unit 5, with the coils 5g-1 to 5g-N respectively provided between each of the second switch means 5e-1 to 5e-N, and the negative electrode-side input output unit 5b. In this case, the coil 5g-i (i = 1, ..., N) is connected in series to the power storage module 5c-i.

The configurations of FIGS. 11A and 11B are advantageous in the point that only one coil 5g may be provided for the power storage modules 5c-1 to 5c-N. Meanwhile, the configurations of FIGS. 11C and 11D are advantageous in the point that the coil provided between two power storage modules can lower the peak value of the current flowing therebetween, when an electric potential difference is generated between the two power storage modules, and the connection state is switched in that state to allow the current to flow between the two power storage modules.

A description is now given of a control example 4 that can be executed by the power supply device according to the first embodiment. In the control example 4, the connection state of the power storage modules 5c-1 to 5c-N is switched. The control example 4 is executed, when the battery ECU 22 switches the electric potential difference (i.e., the voltage Vb of the power storage unit) between the positive electrode-side input output unit 5a and the negative electrode-side input output unit 5b of the power storage unit 5 from a first voltage to a second voltage that is different from the first voltage. Specifically, when switching the voltage Vb from the first voltage to the second voltage, the battery ECU 22 performs control to gradually increase a ratio of the period of the second voltage to the period of the first voltage while repeatedly switching between the first voltage and the second voltage, and then continuously use the second voltage.

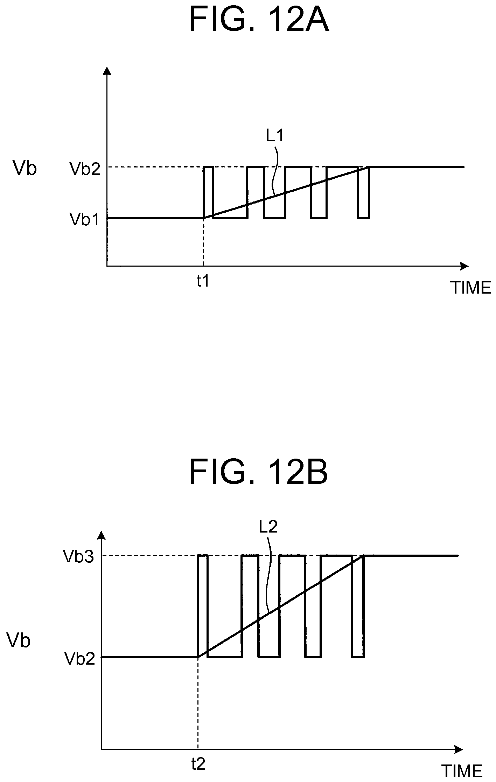

FIGS. 12A and 12B illustrate one example of switching the voltage value in the control example 4. FIG. 12A illustrates the case where the voltage Vb of the power storage unit 5 is switched from Vb1 to Vb2 at time t1. FIG. 12B illustrates the case where the voltage Vb is switched from Vb2 to Vb3 at time t2.

As illustrated in FIG. 12A, when switching the value of the voltage Vb from Vb1 to Vb2, the battery ECU 22 controls the first switch group 5d, the second switch group 5e, and the third switch group 5f to gradually increase the ratio of the period of the Vb2 to the period of the Vb1 while repeatedly switching the voltage Vb from Vb1 to Vb2, and then continuously use Vb2. That is, the battery ECU 22 performs the control same as the PWM control. As a result, the value of the voltage Vb changes such that the voltage Vb gradually increases from Vb1 to Vb2 as illustrated with a line L1. As a consequence, generation of a rush current when the value of the voltage Vb is switched from Vb1 to Vb2 can be prevented. The period of Vb1 and the period of Vb2 are set to prevent generation of the rush current.

In the case illustrated in FIG. 12B, when switching the value of the voltage Vb from Vb2 to Vb3, the battery ECU 22 also similarly controls the first switch group 5d, the second switch group 5e, and the third switch group 5f to gradually increase a ratio of the period of the Vb3 to the period of the Vb2 while repeatedly switching the voltage Vb from Vb2 to Vb3, and then continuously uses Vb3. The period of Vb2 and the period of Vb3 are also set to prevent generation of the rush current. As a consequence, since the value of the voltage Vb changes such that the voltage Vb gradually increases from Vb2 to Vb3 as illustrated with a line L2, generation of the rush current can be prevented.

FIGS. 12A and 12B describe the case where the voltage Vb is switched to larger values. However, in the case where the voltage Vb is switched from a larger value to a smaller value, like from Vb3 to Vb2 at time t3, or from Vb2 to Vb1 at time t4 in FIG. 10, generation of the rush current can also be prevented by performing the same control as in the control example 4.

The control example 4 can be executed in the power supply device according to the first embodiment as well as in all the power supply devices according to the second to sixth embodiments.

The embodiments disclosed are not intended to limit the present invention. For example, although the battery ECU 22 controls the first switch group 5d, the second switch group 5e, and the third switch group 5f in the embodiments, the HV-ECU 21 may control the switch groups instead. The present invention also includes those constituted by properly combining the disclosed constituent elements. Further effects and modifications can easily be derived by those skilled in the art. Therefore, more extensive aspects of the present invention are not limited to the embodiments disclosed, and various changes are possible.

## Claims

1. A power supply device comprising:
a positive electrode-side input output unit (5a);
a negative electrode-side input output unit (5b);
1st to N-th power storage modules (5c) where 2 ≤ N, the power storage modules (5c) each including a power storage mechanism;
a first switch group (5d) including 1st to N-th first switch mechanisms each configured to conduct and cut off a current, the 1st to N-th first switch mechanisms being respectively connected between positive electrodes of the 1st to N-th power storage modules (5c) and the positive electrode-side input output unit (5a);
a second switch group (5e) including 1st to N-th second switch mechanisms each configured to conduct and cut off the current, the 1st to N-th second switch mechanisms being respectively connected between negative electrodes of the 1st to N-th power storage modules (5c) and the negative electrode-side input output unit (5b); and
a third switch group (5f) including 1st to N-th third switch mechanisms each configured to conduct and cut off the current, the 1st to N-1-th third switch mechanisms being respectively connected between positive electrodes of the 1st to N-1-th power storage modules and negative electrodes of the 2nd to N-th power storage modules, the N-th third switch mechanism (5f-N) being connected between a positive electrode of an N-th power storage module (5c-N) and a negative electrode of the 1st power storage module (5c-1).

2. The power supply device according to claim 1, further comprising
coils (5g), wherein
each of the power storage modules (5c) is connected in series with at least one of the coils (5g).

3. The power supply device according to claim 1 or 2, further comprising
an electronic control unit (22) configured to switch a connection state of the power storage modules (5c) by controlling the 1st to N-th first switch mechanisms, the 1st to N-th second switch mechanisms, and the 1st to N-th third switch mechanisms to be in a current conductive state and a current cutoff state.

4. The power supply device according to claim 3, wherein
the electronic control unit (22) is configured to switch the connection state of the power storage modules (5c) such that specified power storage modules are connected to each other by one of a series connection, a parallel connection, and a series parallel connection between the positive electrode-side input output unit (5a) and the negative electrode-side input output unit (5b).

5. The power supply device according to claim 4, wherein
the electronic control unit (22) is configured to switch the connection state of the specified power storage modules in terms of time.

6. The power supply device according to claim 4, wherein
the electronic control unit (22) is configured to switch the connection state of the specified power storage modules based on a charging state of the power storage modules.

7. The power supply device according to claim 3, wherein
the electronic control unit (22) is configured to switch the connection state of the power storage modules (5c) so as to form a current path that excludes a failed switch mechanism when any one switch mechanism is failed out of the 1st to N-th first switch mechanisms, the 1st to N-th second switch mechanisms, and the 1st to N-th third switch mechanisms.

8. The power supply device according to claim 3, wherein
the electronic control unit (22) is configured to switch the connection state of the power storage modules (5c) so as to change an electric potential difference between the positive electrode-side input output unit (5a) and the negative electrode-side input output unit (5b).

9. The power supply device according to claim 8, wherein
the electronic control unit (22) is configured to switch the connection state of the power storage modules (5c) to any one of a series connection, a parallel connection, and a series parallel connection.

10. The power supply device according to claim 8 or 9, wherein
while the electronic control unit (22) is switching the electric potential difference between the positive electrode-side input output unit (5a) and the negative electrode-side input output unit (5b) from a first voltage to a second voltage that is different from the first voltage, the electronic control unit (22) is configured to gradually increase a ratio of a period of the second voltage to a period of the first voltage while repeatedly switching the first voltage and the second voltage, and then continuously use the second voltage.
